# EUROPEAN PATENT APPLICATION

(11) **EP 4 797 358 A1**
(43) Date of publication of application: **26.08.2026**
(21) Application number: 24902736.8
(22) Date of filing: 06.12.2024
(51) Int. Cl.: H01M 4/62, H01M 4/36, H01M 10/0567, H01M 10/0525

(54) **ZIRCONIUM-YTTRIUM COMPOSITE COATED MODIFIED LITHIUM NICKEL COBALT MANGANESE OXIDE POSITIVE ELECTRODE MATERIAL AND PREPARATION METHOD THEREFOR, AND LITHIUM-ION BATTERY**

(30) Priority: 11.12.2023 CN 202311696209
(71) Applicant: BASF Shanshan Battery Materials Co., Ltd., Changsha, Hunan 410205 (CN)
(72) Inventor: ZHANG, Qiang, Changsha, Hunan 410205 (CN); LUO, Gui, Changsha, Hunan 410205 (CN); HUANG, Min, Changsha, Hunan 410205 (CN); TAN, Xinxin, Changsha, Hunan 410205 (CN)
(74) Representative: Finetti, Claudia
(86) International application number: PCT/CN2024/137515
(87) International publication number: WO 2025/124315

(57) **Abstract**

The present application relates to a zirconium-yttrium composite coated modified lithium nickel cobalt manganese oxide positive electrode material, a preparation method thereof, and a lithium-ion battery, wherein the zirconium-yttrium composite coated modified lithium nickel cobalt manganese oxide positive electrode material includes a lithium nickel cobalt manganese oxide positive electrode material matrix and a zirconium-yttrium composite coating layer coated on the surface of the matrix, the chemical composition of the zirconium-yttrium composite coating layer is Zr_{z}Y_{1-z}O_{1.5+0.5z}, where 0.4≤z≤0.8. The zirconium-yttrium composite coating layer is coated on the surface of the lithium nickel cobalt manganese oxide positive electrode material matrix, this coating layer has abundant oxygen vacancies, which can rapidly absorb oxygen elements generated during electrochemical reactions due to lithium-ion intercalation/deintercalation or electrolyte corrosion of the positive electrode material, ensuring the high-temperature storage and cycling performance of the material.

## Description

### RELATED APPLICATIONS

This application claims priority to Chinese patent application No. 202311696209.1, entitled "ZIRCONIUM-YTTRIUM COMPOSITE COATED MODIFIED LITHIUM NICKEL COBALT MANGANESE OXIDE POSITIVE ELECTRODE MATERIAL AND PREPARATION METHOD THEREFOR, AND LITHIUM-ION BATTERY", filed on December 11, 2023, the content of which is hereby incorporated by reference in its entirety.

### TECHNICAL FIELD

The present application relates to the field of lithium-ion battery materials, and in particular to a zirconium-yttrium composite coated modified lithium nickel cobalt manganese oxide positive electrode material, a preparation method thereof, and a lithium-ion battery.

### BACKGROUND

With the development of new energy vehicles to date, people's requirements for driving range continue to increase. For lithium battery positive electrode materials, developing lithium-ion batteries with high energy density, high power density, and low cost is crucial. Ternary lithium nickel cobalt manganese oxide positive electrode materials, owing to their lower cobalt content and high capacity characteristics, have significant advantages in capacity and cost compared to lithium cobalt oxide.

From a morphological perspective, lithium nickel cobalt manganese oxide positive electrode materials are mainly divided into secondary spherical particles and single-crystal type (high-voltage) particles. Currently, relatively mature preparation methods exist for both types of materials. For example, Chinese patent application No. 201811382498.7 describes a preparation method of a high-nickel positive electrode material, which produces a secondary spherical material. The primary particles of the secondary spheres are relatively small, and their energy density is relatively high. However, due to constraints such as poor high-temperature cycling performance, rapid increase in high-temperature DCR, and gas generation, these materials are predominantly used in the 3C field and less in power fields. Chinese patent application No. 201710883429.3 discloses a preparation method of a single-crystal type material, which produces a single-crystal type positive electrode material. Since the single-crystal type positive electrode material has larger primary particles and complete structures, the anisotropy of lattice expansion and contraction between grains during cycling is insignificant, allowing the material to maintain structural integrity during repeated cycling, thereby improving the cycling stability. The single-crystal type materials also have lower specific surface area and excellent structural stability, enabling them to withstand higher cutoff voltages (≥4.35 V), thus achieving energy density comparable to high-nickel materials, and are currently widely used in the new energy industry.

Generally, as the cutoff voltage of high-voltage ternary positive electrode materials continues to increase to above 4.35 V, the material surface undergoes structural transformation from the layered structure to spinel structure and then to NiO rock-salt phase. During repeated lithium-ion intercalation and deintercalation cycles, due to crystal anisotropy, internal microcracks form within the crystals of the material, and electrolyte can easily enter the interior of material particles and induce various side reactions on the particle surfaces. These factors deteriorate various key performance aspects of lithium-ion batteries, such as capacity, cycling, rate capability, and gas generation. Therefore, improving the surface structural stability of high-voltage materials has become an important research topic for high-voltage ternary positive electrode materials.

Chinese patent publication No. CN111509205A discloses a preparation method of a zirconium-coated ternary positive electrode material for lithium-ion batteries, which coats ammonium zirconium carbonate onto the surface of the ternary positive electrode material through wet mixing, followed by drying and calcination to obtain a zirconium oxide-coated single-crystal ternary positive electrode material. The surface coating can reduce the occurrence of side reactions during electrochemical processes and avoid corrosion of the ternary positive electrode material surface by electrolyte, thereby enabling the ternary positive electrode material to maintain good cycling stability and capacity retention. The zirconium oxide coating layer mainly functions to isolate electrolyte under normal voltages, thereby improving the cycling stability and capacity retention of the material. However, this coating layer shows no significant effect on improving cycling stability and capacity retention under high voltages, especially on improving storage and gas generation performance.

### SUMMARY

The present application provides a zirconium-yttrium composite coated modified lithium nickel cobalt manganese oxide positive electrode material with good high-temperature cycling performance and storage performance and less high-temperature gas generation, and a preparation method and a lithium-ion battery.

The present application provides following technical solutions:

A first aspect of the present application provides a zirconium-yttrium composite coated modified lithium nickel cobalt manganese oxide positive electrode material, including a lithium nickel cobalt manganese oxide positive electrode material matrix and a zirconium-yttrium composite coating layer coated on the surface of the lithium nickel cobalt manganese oxide positive electrode material matrix, wherein the chemical composition of the zirconium-yttrium composite coating layer is Zr_{z}Y_{1-z}O_{1.5+0.5z}, where 0.4≤z≤0.8.

In any embodiment, the chemical composition of the lithium nickel cobalt manganese oxide positive electrode material matrix is LiₐNi_{b}Co_{c}Mn_{1-b-c-e}MₑO₂, where 1.0≤a≤1.2, 0.5≤b<1, 0<c≤0.1, 0≤e≤0.06, M includes one or more of Mg, Ti, Zr, Ba, Al, Y, Sr, Nd, W, or Ca.

In any embodiment, the molar ratio of the zirconium-yttrium composite coating layer to the transition metal elements in the lithium nickel cobalt manganese oxide positive electrode material matrix is in a range from 0.02% to 0.5%.

A second aspect of the present application provides a method for preparing the zirconium-yttrium composite coated modified lithium nickel cobalt manganese oxide positive electrode material of the first aspect of the present application, including the following steps:
(1) mixing a nickel cobalt manganese hydroxide precursor, a lithium source, and an M-containing compound in stoichiometric ratio, sintering, and pulverizing to obtain a lithium nickel cobalt manganese oxide positive electrode material matrix;
(2) mixing a zirconium compound and an yttrium compound uniformly, then adding to deionized water and stirring uniformly, after the materials are completely dissolved, adding ammonia water to adjust the pH value, and stirring for reaction, then filtering, washing, and freeze-drying the precipitate obtained from the reaction to obtain a coating agent intermediate;
(3) mixing the lithium nickel cobalt manganese oxide positive electrode material matrix obtained in step (1) with the coating agent intermediate obtained in step (2), and then sintering the obtained mixture, thereby achieving the zirconium-yttrium composite coated modified lithium nickel cobalt manganese oxide positive electrode material.

In any embodiment, in step (1), the lithium source is one or more of lithium carbonate, lithium hydroxide, or lithium acetate.

In any embodiment, the M-containing compound is one or more selected from a M-containing carbonate, a M-containing hydroxide, a M-containing sulfate, or a M-containing oxide.

In any embodiment, in step (1), the sintering is performed in an atmosphere with oxygen or air introduced, the flow rate of the introduced gas is in a range from 8 m³/h to 12 m³/h, the temperature of the sintering is in a range from 700 °C to 950 °C, and the time period of the sintering is in a range from 12 hours (h) to 20 h.

In any embodiment, in step (2), the zirconium compound is one or more selected from zirconium nitrate, zirconium chloride, zirconium sulfate, zirconium oxychloride, or zirconium acetate.

In any embodiment, in step (2), the yttrium compound is one or more selected from yttrium chloride, yttrium nitrate, yttrium sulfate, or yttrium acetate.

In any embodiment, in step (2), the ratio of the volume of the added deionized water to the total amount of substance of the zirconium compound and the yttrium compound is in a range from 30 mL/mmol to 50 mL/mmol.

In any embodiment, in step (2), the pH value is adjusted to 8.5 to 10.5.

In any embodiment, in step (2), the temperature of the stirring for reaction is in a range from 30 °C to 60 °C, the time period of the reaction is in a range from 6 h to 20 h, and the stirring speed is in a range from 100 r/min to 550 r/min.

In any embodiment, in step (2), the freeze-drying refers to first freezing at a temperature of -30 °C to -50 °C for 8 h to 10 h, and then performing vacuum drying, wherein the temperature of the vacuum drying is in a range from -20 °C to -30 °C, the time period of the vacuum drying is in a range from 12 h to 24 h, the vacuum degree is in a range from 0.05 mbar to 0.35 mbar, preferably in a range from 0.13 mbar to 0.30 mbar. Freeze-drying can maintain the initial state of the material, and after drying, the prepared coating agent intermediate has the advantages of large specific surface area, small particle sizes, and low moisture content.

In any embodiment, in step (2), the particle size D50 of the coating agent intermediate is in a range from 0.01 µm to 0.25 µm, the moisture content of the coating agent intermediate is in a range from 100 ppm to 400 ppm, and the specific surface area of the coating agent intermediate is in a range from 30 m²/g to 60 m²/g.

In any embodiment, in step (3), the sintering is performed in a high-oxygen-pressure atmosphere furnace, the oxygen pressure in the high-oxygen-pressure atmosphere furnace during the sintering is in a range from 6 MPa to 12 MPa, the temperature of the sintering is in a range from 400 °C to 800 °C, and the time period of the sintering is in a range from 8 h to 16 h.

A third aspect of the present application provides a lithium-ion battery, wherein the positive electrode material of the lithium-ion battery includes the zirconium-yttrium composite coated modified lithium nickel cobalt manganese oxide positive electrode material of the first aspect of the present application or includes the zirconium-yttrium composite coated modified lithium nickel cobalt manganese oxide positive electrode material prepared by the preparation method of the second aspect of the present application.

Compared with the prior art, the present application has following advantages:
(1) The applicant has found through research that in the zirconium-yttrium composite coating layer Zr_{z}Y_{1-z}O_{1.5+0.5z}, when z<0.4, the coating layer structure is unstable and shows no improvement effect on the cycling or storage performance when composited with the lithium nickel cobalt manganese oxide positive electrode material; when z>0.8, the formed coating material has fewer oxygen vacancies and shows no improvement effect on storage performance or cycling gas generation. The present application coats a zirconium-yttrium composite coating layer on the surface of the lithium nickel cobalt manganese oxide positive electrode material matrix. This coating layer has abundant oxygen vacancies, which can rapidly absorb oxygen elements generated during electrochemical reactions due to lithium-ion intercalation/deintercalation or electrolyte corrosion of the positive electrode material, reducing or avoiding side reactions between oxygen elements and other substances in the electrolyte, thereby reducing CO₂ generation and improving battery safety performance. In contrast, coating with a zirconium compound or yttrium compound alone results in an oxide that lacks high oxygen vacancy characteristic and exhibits poor absorption of oxygen elements. Thus, compared with using a zirconium compound or yttrium compound alone for coating modification of the lithium nickel cobalt manganese oxide positive electrode material, using the zirconium-yttrium composite coating layer can significantly improve the high-temperature storage performance and gas generation performance during cycling of the material under high voltages.
(2) The coating agent intermediate prepared through the co-precipitation method and freeze-drying in the present application has the advantages of large specific surface area, small particle size, and low moisture content, and can fully contact and adhere to the surface of the lithium nickel cobalt manganese oxide positive electrode material, which, combined with the subsequent high-oxygen-pressure sintering process, can ensure a more uniform coating layer in the prepared zirconium-yttrium composite coated modified lithium nickel cobalt manganese oxide positive electrode material, which can increase its contact area with the electrolyte, effectively avoiding the corrosion of the surface of the lithium nickel cobalt manganese oxide positive electrode material by the electrolyte under high-voltage conditions, slowing down the occurrence of side reactions, and thereby further improving the capacity retention of the material.

### BRIEF DESCRIPTION OF THE DRAWINGS

In order to better describe and illustrate the embodiments or examples provided by the present application, reference can be made to one or more drawings. Additional details or examples used to describe the drawings should not be considered as limiting the scope of any of the disclosed application, the presently described embodiments or examples, and the best modes as presently understood for the application. Moreover, the same reference numerals are used throughout the drawings to denote the same components. In the drawings:
FIG. 1 shows an XRD pattern of the modified lithium nickel cobalt manganese oxide positive electrode material prepared in Example 1 of the present application.
FIG. 2 shows an XRD pattern of the modified lithium nickel cobalt manganese oxide positive electrode material prepared in Comparative Example 1 of the present application.

### DETAILED DESCRIPTION

In order to facilitate understanding of the present application, the present application will be described more comprehensively and in detail below with reference to the accompanying drawings and preferred embodiments, but the scope of protection of the present application is not limited to the following specific embodiments.

Unless otherwise defined, all technical terms used hereinafter have the same meaning as commonly understood by those skilled in the art. The technical terms used herein are only for the purpose of describing specific embodiments and are not intended to limit the scope of protection of the present application.

Unless otherwise specified, the various reagents and raw materials used in the present application are commercially available products or products that can be prepared by known methods.

### Example 1

A zirconium-yttrium composite coated modified lithium nickel cobalt manganese oxide positive electrode material of the present application, including a lithium nickel cobalt manganese oxide positive electrode material matrix Li_{1.05}Ni_{0.69}Co_{0.10}Mn_{0.206}W_{0.004}O₂ and a zirconium-yttrium composite coating layer Zr_{0.8}Y_{0.2}O_{1.9} coated on the surface of the matrix, wherein the molar ratio of the zirconium-yttrium composite coating layer Zr_{0.8}Y_{0.2}O_{1.9} to the transition metal elements in the matrix material is 0.5%.

The preparation method for the zirconium-yttrium composite coated modified lithium nickel cobalt manganese oxide positive electrode material in this example includes the following steps:
(1) According to the stoichiometric ratio of the various elements in Li_{1.05}Ni_{0.69}Co_{0.10}Mn_{0.206}W_{0.004}O₂, a nickel cobalt manganese hydroxide precursor, lithium hydroxide, and tungsten oxide were mixed. The mixture was placed in an oxygen atmosphere furnace for sintering. During sintering, oxygen gas was introduced at a flow rate of 10 m³/h, the sintering temperature was 920 °C, and the sintering time period was 16 h. After sintering was completed, the sintered material was pulverized and sieved to obtain a lithium nickel cobalt manganese oxide positive electrode material matrix Li_{1.05}Ni_{0.69}Co_{0.10}Mn_{0.206}W_{0.004}O₂.
(2) Zirconium acetate and yttrium acetate at a molar ratio of 4:1 were uniformly mixed, and then deionized water was added, wherein 35 mL of deionized water was added per 1 millimole of the zirconium acetate and yttrium acetate mixture. The solution was then placed in a reaction kettle and continuously stirred at a speed of 200 r/min, and the temperature of the solution was maintained at 50 °C. When no obvious solid particles were present in the solution, ammonia water was added to adjust the pH value, stabilizing the pH value at around 9.5. The solution was stirred for 8 h until no more solid material precipitated from the solution. The stirring was then stopped, and the product was filtered and washed.
(3) The washed product obtained in step (2) was mixed with deionized water, placed in a freezing tube and frozen at -50 °C for 10 h, then placed in freeze-drying equipment with the vacuum pump activated for freeze-drying. During the freeze-drying process, the temperature was maintained at -30 °C, the vacuum degree was 0.25 mbar, and drying was performed for 18 h to obtain a coating agent intermediate. The coating agent intermediate had a D50 of 0.15 µm, a moisture content of 150 ppm, and a specific surface area of 45 m²/g.
(4) According to a molar ratio of the zirconium-yttrium composite coating layer Zr_{0.8}Y_{0.2}O_{1.9} to the transition metal elements in the lithium nickel cobalt manganese oxide positive electrode material matrix of 0.5%, the matrix obtained in step (1) and the coating agent intermediate obtained in step (3) were directly mixed by a dry method. The mixture was then placed in a high-oxygen-pressure atmosphere furnace for sintering, with the furnace oxygen pressure controlled at 9 MPa, the sintering temperature at 650 °C, and the sintering time period at 12 h. Finally, the product was sieved to obtain the zirconium-yttrium composite coated modified lithium nickel cobalt manganese oxide positive electrode material.

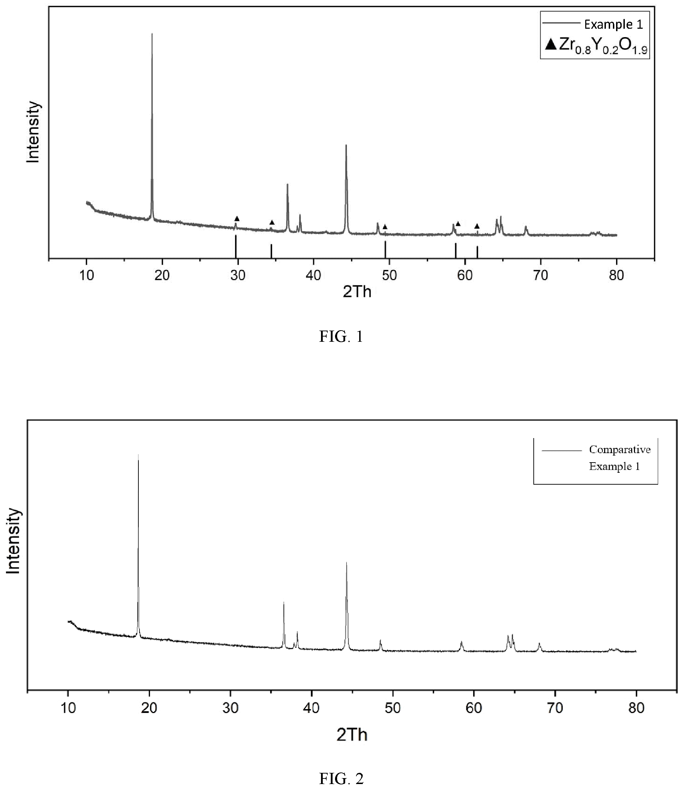

The XRD pattern of the zirconium-yttrium composite coated modified lithium nickel cobalt manganese oxide positive electrode material prepared in this example is shown in FIG. 1, wherein the diffraction peaks marked with black triangles correspond to the XRD pattern of the zirconium-yttrium composite coating layer formed after high-temperature dehydration of the coating agent intermediate obtained in step (3).

### Example 2

A zirconium-yttrium composite coated modified lithium nickel cobalt manganese oxide positive electrode material of the present application, including a lithium nickel cobalt manganese oxide positive electrode material matrix Li_{1.05}Ni_{0.69}Co_{0.10}Mn_{0.206}W_{0.004}O₂ and a zirconium-yttrium composite coating layer Zr_{0.6}Y_{0.4}O_{1.8} coated on the surface of the matrix, wherein the molar ratio of the zirconium-yttrium composite coating layer Zr_{0.6}Y_{0.4}O_{1.8} to the transition metal elements in the matrix material is 0.2%.

The preparation method for the zirconium-yttrium composite coated modified lithium nickel cobalt manganese oxide positive electrode material in this example includes the following steps:
(1) According to the stoichiometric ratio of the various elements in Li_{1.05}Ni_{0.69}Co_{0.10}Mn_{0.206}W_{0.004}O₂, a nickel cobalt manganese hydroxide precursor, lithium hydroxide, and tungsten oxide were mixed. The mixture was placed in an oxygen atmosphere furnace for sintering. During sintering, oxygen gas was introduced at a flow rate of 10 m³/h, the sintering temperature was 920 °C, and the sintering time period was 16 h. After sintering was completed, the sintered material was pulverized and sieved to obtain a lithium nickel cobalt manganese oxide positive electrode material matrix Li_{1.05}Ni_{0.69}Co_{0.10}Mn_{0.206}W_{0.004}O₂.
(2) Zirconium acetate and yttrium acetate at a molar ratio of 3:2 were uniformly mixed, and then deionized water was added, wherein 40 mL of deionized water was added per 1 millimole of the zirconium acetate and yttrium acetate mixture. The solution was then placed in a reaction kettle and continuously stirred at a speed of 150 r/min, and the temperature of the solution was maintained at 60 °C. When no obvious solid particles were present in the solution, ammonia water was added to adjust the pH value, maintaining the pH value at around 10. The solution was stirred for 10 h until no more solid material precipitated from the solution. The stirring was then stopped, and the product was filtered and washed.
(3) The washed product obtained in step (2) was mixed with deionized water, placed in a freezing tube and frozen at -40 °C for 10 h, then placed in freeze-drying equipment with the vacuum pump activated for freeze-drying. During the drying process, the temperature was maintained at -20 °C, the vacuum degree was maintained at 0.20 mbar, and drying was performed for 18 h to obtain a coating agent intermediate. The coating agent intermediate had a D50 of 0.18 µm, a moisture content of 160 ppm, and a specific surface area of 48 m²/g.
(4) According to a molar ratio of the zirconium-yttrium composite coating layer Zr_{0.6}Y_{0.4}O_{1.8} to the transition metal elements in the lithium nickel cobalt manganese oxide positive electrode material matrix of 0.2%, the matrix obtained in step (1) and the coating agent intermediate obtained in step (3) were mixed by a dry method. The mixture was then placed in a high-oxygen-pressure atmosphere furnace for sintering, with the furnace oxygen pressure controlled at 9 MPa, the sintering temperature at 550 °C, and the sintering time period at 16 h. Finally, the product was sieved to obtain the zirconium-yttrium composite coated modified lithium nickel cobalt manganese oxide positive electrode material.

### Example 3

A zirconium-yttrium composite coated modified lithium nickel cobalt manganese oxide positive electrode material of the present application, including a lithium nickel cobalt manganese oxide positive electrode material matrix Li_{1.05}Ni_{0.69}Co_{0.10}Mn_{0.206}W_{0.004}O₂ and a zirconium-yttrium composite coating layer Zr_{0.4}Y_{0.6}O_{1.7} coated on the surface of the matrix, wherein the molar ratio of the zirconium-yttrium composite coating layer Zr_{0.4}Y_{0.6}O_{1.7} to the transition metal elements in the matrix material is 0.06%.

The preparation method for the zirconium-yttrium composite coated modified lithium nickel cobalt manganese oxide positive electrode material in this example includes the following steps:
(1) According to the stoichiometric ratio of the various elements in Li_{1.05}Ni_{0.69}Co_{0.10}Mn_{0.206}W_{0.004}O₂, a nickel cobalt manganese hydroxide precursor, lithium hydroxide, and tungsten oxide were mixed. The mixture was placed in an oxygen atmosphere furnace for sintering. During sintering, oxygen gas was introduced at a flow rate of 10 m³/h, the sintering temperature was controlled at 920 °C, and the sintering time period was 16 h. After sintering was completed, the sintered material was pulverized and sieved to obtain a lithium nickel cobalt manganese oxide positive electrode material matrix Li1.05Ni0.69Co0.10Mn0.206W0.004O2.
(2) Zirconium acetate and yttrium acetate at a molar ratio of 2:3 were uniformly mixed, and then deionized water was added, wherein 50 mL of deionized water was added per 1 millimole of the zirconium acetate and yttrium acetate mixture. The solution was then placed in a reaction kettle and continuously stirred at a speed of 350 r/min, and the temperature of the solution was maintained at 40 °C. When no obvious solid particles were present in the solution, ammonia water was added to adjust the pH value, maintaining the pH value at around 8.5. The solution was stirred for 20 h until no more solid material precipitated from the solution. The stirring was then stopped, and the product was filtered and washed.
(3) The washed product obtained in step (2) was mixed with deionized water, placed in a freezing tube and frozen at -50 °C for 10 h, then placed in freeze-drying equipment with the vacuum pump activated for freeze-drying. During the drying process, the temperature was maintained at -30 °C, the vacuum degree was maintained at 0.30 mbar, and drying was performed for 12 h to obtain a coating agent intermediate. The coating agent intermediate had a D50 of 0.08 µm, a moisture content of 200 ppm, and a specific surface area of 50 m²/g.
(4) According to a molar ratio of the zirconium-yttrium composite coating layer Zr_{0.4}Y_{0.6}O_{1.7} to the transition metal elements in the lithium nickel cobalt manganese oxide positive electrode material matrix of 0.06%, the matrix obtained in step (1) and the coating agent intermediate obtained in step (3) were directly mixed by a dry method. The mixture was then placed in a high-oxygen-pressure atmosphere furnace for sintering, with the furnace oxygen pressure controlled at 9 MPa, the sintering temperature at 750 °C, and the sintering time period at 8 h. Then, the product was sieved to obtain the zirconium-yttrium composite coated modified lithium nickel cobalt manganese oxide positive electrode material.

### Example 4

A zirconium-yttrium composite coated modified lithium nickel cobalt manganese oxide positive electrode material of the present application, including a lithium nickel cobalt manganese oxide positive electrode material matrix Li_{1.05}Ni_{0.69}Co_{0.10}Mn_{0.206}Ba_{0.004}O₂ and a zirconium-yttrium composite coating layer Zr_{0.5}Y_{0.5}O_{1.75} coated on the surface of the matrix, wherein the molar ratio of the zirconium-yttrium composite coating layer Zr_{0.5}Y_{0.5}O_{1.75} to the transition metal elements in the matrix material is 0.2%.

The preparation method for the zirconium-yttrium composite coated modified lithium nickel cobalt manganese oxide positive electrode material in this example includes the following steps:
(1) According to the stoichiometric ratio of the various elements in Li_{1.05}Ni_{0.69}Co_{0.10}Mn_{0.206}Ba_{0.004}O₂, a nickel cobalt manganese hydroxide precursor, lithium hydroxide, and barium carbonate were mixed. The mixture was placed in an oxygen atmosphere furnace for sintering. During sintering, oxygen gas was introduced at a flow rate of 10 m³/h, the sintering temperature was 850 °C, and the sintering time period was 16 h. After sintering was completed, the sintered material was pulverized and sieved to obtain a lithium nickel cobalt manganese oxide positive electrode material matrix Li1.05Ni0.69Co0.10Mn0.206Ba0.004O2.
(2) Zirconium acetate and yttrium acetate at a molar ratio of 1:1 were uniformly mixed, and then deionized water was added, wherein 50 mL of deionized water was added per 1 millimole of the zirconium acetate and yttrium acetate mixture. The solution was then placed in a reaction kettle and continuously stirred at a speed of 350 r/min, and the temperature of the solution was maintained at 40 °C. When no obvious solid particles were present in the solution, ammonia water was added to adjust the pH value, maintaining the pH value at around 8.5. The solution was stirred for 20 h until no more solid material precipitated from the solution. The stirring was then stopped, and the product was filtered and washed.
(3) The washed product obtained in step (2) was mixed with deionized water, placed in a freezing tube and frozen at -40 °C for 10 h, then placed in freeze-drying equipment with the vacuum pump activated for freeze-drying. During the drying process, the temperature was maintained at -20 °C, the vacuum degree was maintained at 0.25 mbar, and drying was performed for 24 h to obtain a coating agent intermediate. The coating agent intermediate had a D50 of 0.10 µm, a moisture content of 100 ppm, and a specific surface area of 60 m²/g.
(4) According to a molar ratio of the zirconium-yttrium composite coating layer Zr_{0.5}Y_{0.5}O_{1.75} to the transition metal elements in the lithium nickel cobalt manganese oxide positive electrode material matrix of 0.2%, the matrix obtained in step (1) and the coating agent intermediate obtained in step (3) were directly mixed by a dry method. The mixture was then placed in a high-oxygen-pressure atmosphere furnace for sintering, with the furnace oxygen pressure controlled at 12 MPa, the sintering temperature at 750 °C, and the sintering time period at 8 h. Finally, the product was sieved to obtain the zirconium-yttrium composite coated modified lithium nickel cobalt manganese oxide positive electrode material.

### Example 5

A zirconium-yttrium composite coated modified lithium nickel cobalt manganese oxide positive electrode material of the present application, including a lithium nickel cobalt manganese oxide positive electrode material matrix Li_{1.05}Ni_{0.69}Co_{0.10}Mn_{0.206}Al_{0.004}O₂ and a zirconium-yttrium composite coating layer Zr_{0.4}Y_{0.6}O_{1.7} coated on the surface of the matrix, wherein the molar ratio of the zirconium-yttrium composite coating layer Zr_{0.4}Y_{0.6}O_{1.7} to the transition metal elements in the matrix material is 0.02%.

The preparation method for the zirconium-yttrium composite coated modified lithium nickel cobalt manganese oxide positive electrode material in this example includes the following steps:
(1) According to the stoichiometric ratio of the various elements in Li_{1.05}Ni_{0.69}Co_{0.10}Mn_{0.206}Al_{0.004}O₂, a nickel cobalt manganese hydroxide precursor, lithium hydroxide, and aluminum hydroxide were mixed. The mixture was placed in an oxygen atmosphere furnace for sintering. During sintering, oxygen gas was introduced at a flow rate of 8 m³/h, the sintering temperature was 850 °C, and the sintering time period was 14 h. After sintering was completed, the sintered material was pulverized and sieved to obtain a lithium nickel cobalt manganese oxide positive electrode material matrix Li1.05Ni0.69Co0.10Mn0.206Al0.004O2.
(2) Zirconium acetate and yttrium acetate at a molar ratio of 2:3 were uniformly mixed, and then deionized water was added, wherein 50 mL of deionized water was added per 1 millimole of the zirconium acetate and yttrium acetate mixture. The solution was then placed in a reaction kettle and continuously stirred at a speed of 350 r/min, and the temperature of the solution was maintained at 40 °C. When no obvious solid particles were present in the solution, ammonia water was added to adjust the pH value, maintaining the pH value at around 8.5. The solution was stirred for 20 h until no more solid material precipitated from the solution. The stirring was then stopped, and the product was filtered and washed.
(3) The washed product obtained in step (2) was mixed with deionized water, placed in a freezing tube and frozen at -50 °C for 10 h, then placed in freeze-drying equipment with the vacuum pump activated for freeze-drying. During the drying process, the temperature was maintained at -20 °C, the vacuum degree was maintained at 0.25 mbar, and drying was performed for 12 h to obtain a coating agent intermediate. The coating agent intermediate had a D50 of 0.1 µm, a moisture content of 150 ppm, and a specific surface area of 50 m²/g.
(4) According to a molar ratio of the zirconium-yttrium composite coating layer Zr_{0.4}Y_{0.6}O_{1.7} to the transition metal elements in the lithium nickel cobalt manganese oxide positive electrode material matrix of 0.02%, the matrix obtained in step (1) and the coating agent intermediate obtained in step (3) were directly mixed by a dry method. The mixture was then placed in a high-oxygen-pressure atmosphere furnace for sintering, with the furnace oxygen pressure controlled at 6 MPa, the sintering temperature at 750 °C, and the sintering time period at 8 h. Finally, the product was sieved to obtain the zirconium-yttrium composite coated modified lithium nickel cobalt manganese oxide positive electrode material.

### Comparative Example 1

Compared with Example 1, this comparative example differs only in that the molar ratio of zirconium acetate to yttrium acetate in step (2) was changed to 1:4, and all other conditions remained consistent with Example 1, to obtain a modified lithium nickel cobalt manganese oxide positive electrode material. The XRD pattern of this modified lithium nickel cobalt manganese oxide positive electrode material is shown in FIG. 2, showing no diffraction peaks of the zirconium-yttrium composite coating material, indicating that the stable composite coating material was not formed.

### Comparative Example 2

Compared with Example 2, this comparative example differs in that the coating agent used in the preparation process was only yttrium acetate, and all other conditions remained consistent with Example 2, to obtain an yttrium oxide coated modified lithium nickel cobalt manganese oxide positive electrode material.

### Comparative Example 3

Compared with Example 3, this comparative example differs in that the coating agent used in the preparation process was only zirconium acetate, and all other conditions remained consistent with Example 3, to obtain a zirconium oxide coated modified lithium nickel cobalt manganese oxide positive electrode material.

### Comparative Example 4

Compared with Example 4, this comparative example differs in that zirconium acetate and yttrium acetate were directly mixed as the coating agent without any treatment of the zirconium acetate and yttrium acetate, and all other conditions remained consistent with Example 4, with the final coating layer formed being zirconium oxide and yttrium oxide.

### Comparative Example 5

Compared with Example 5, this comparative example differs in that: in step (4), the furnace oxygen pressure was controlled at 3 MPa, and all other conditions remained consistent with Example 5.

### Comparative Example 6

Compared with Example 5, this comparative example differs in that: in step (3), freeze-drying was replaced with vacuum drying, wherein the drying temperature of the vacuum drying was 80 °C, the vacuum degree was maintained at 0.25 mbar, and drying was performed for 12 h, and all other conditions remained consistent with Example 5.

### Physical and Chemical Performance Testing

Positive electrode plate: The positive electrode materials prepared in the above examples and comparative examples were each mixed with conductive carbon black, graphite, and PVDF binder at a mass ratio of 94:2:2:2 and introduced to NMP solvent, mixed uniformly and then coated onto Al foil, dried at 120 °C for 12 h, and roll-pressed to prepare positive electrode plates.

Negative electrode plate: Graphite, conductive carbon black, CMC, and SBR were mixed at a mass ratio of 97:1:1:1 and added to NMP solvent, mixed uniformly and then coated onto Cu foil, dried at 120 °C for 12 h, and roll-pressed to prepare negative electrode plates.

Cell assembly: The above positive electrode plates were respectively assembled with the negative electrode plates, separators, and electrolyte into 1.5Ah pouch cells. The separator had a thickness of 20 µm; the electrolyte adopted LiPF₆ as the lithium salt, ethylene carbonate, ethyl methyl carbonate, and diethyl carbonate at a volume ratio of 3:5:2 as the solvent, and 1.5 wt% vinylene carbonate and 1 wt% LiPO₂F₂ as the additives.

The electrochemical performance testing was conducted at 25 °C with a voltage window of 2.8 V to 4.4 V according to the following specific test protocol: At room temperature 25 °C, charging at 0.33 C to the cutoff voltage, then potentiostatic charging to the cutoff current ≤0.005 C, stop charging, and resting the cells for 5 min, and then discharging at 0.33 C or 1 C rate to the cutoff voltage of 2.8V, with the resulting discharge capacities being the 0.33 C discharge capacity and 1 C discharge capacity respectively. The high-temperature cycling and gas generation testing was conducted according to the following protocol: At 45 °C, charging at 1 C to 4.4 V, discharging at 1 C to 2.8 V, cycling for 1000 cycles, and calculating the capacity retention and gas generation amount. The high-temperature storage gas generation testing was conducted according to the following protocol: At 25 °C, charging at 1 C to 4.4 V, then placing the cells in a 60 °C constant temperature oven, storing for 35 days, and calculating the gas generation amount using the water displacement method.

The electrochemical performance data of the pouch cells assembled from the materials obtained in the above examples and comparative examples, including the 0.33 C discharge specific capacity, 1 C discharge specific capacity, 1000-cycle capacity retention, 1000-cycle gas generation, and 60 °C storage gas generation, are shown in Table 1, wherein the 1000-cycle gas generation refers to the difference between the cell volume after 1000 cycles and the initial cell volume, and 60 °C storage gas generation refers to the difference between the cell volume after storage at 60 °C for 35 days and the initial cell volume.

**Table 1: Electrochemical data of modified lithium nickel cobalt manganese oxide positive electrode materials of the examples and comparative examples**

| | 0.33C discharge capacity | 1C discharge capacity | 45°C/1000-cycle capacity retention % | 45°C/1000 -cycle gas generation | 60°C/35-day storage gas generation |
|---|---|---|---|---|---|
| | mAh/g | mAh/g | | mL/Ah | mL/Ah |
| Example 1 | 201.8 | 194.3 | 91.6 | 1.52 | 0.32 |
| Example 2 | 202.4 | 194.9 | 91.0 | 1.80 | 0.45 |
| Example 3 | 202.9 | 195.4 | 91.3 | 1.63 | 0.48 |
| Example 4 | 201.0 | 194.0 | 90.8 | 1.45 | 0.39 |
| Example 5 | 202.2 | 194.6 | 90.6 | 1.92 | 0.56 |
| Comparative Example 1 | 201.3 | 193.9 | 85.6 | 2.55 | 0.89 |
| Comparative Example 2 | 200.4 | 192.9 | 86.2 | 2.84 | 0.88 |
| Comparative Example 3 | 200.6 | 193.2 | 88.0 | 2.49 | 1.05 |
| Comparative Example 4 | 200.8 | 193.4 | 89.3 | 2.06 | 0.95 |
| Comparative Example 5 | 200.3 | 192.9 | 87.3 | 2.94 | 1.02 |
| Comparative Example 6 | 199.5 | 191.9 | 86.3 | 3.05 | 1.50 |

From the test data in Table 1, it can be seen that the zirconium-yttrium composite coated modified lithium nickel cobalt manganese oxide positive electrode materials in Examples 1 to 5 all present capacity retention greater than 90% after 1000 cycles at 1 C and 45 °C, with gas generation all below 2.0 mL/Ah, and storage gas generation at 60 °C all below 0.6 mL/Ah. These results indicates that the high-temperature cycling performance of the zirconium-yttrium composite coated modified lithium nickel cobalt manganese oxide positive electrode material of the present application is significantly improved. Moreover, the materials also exhibit exceptionally excellent high-temperature storage performance and gas generation performance during cycling. In contrast, the modified lithium nickel cobalt manganese oxide positive electrode materials in Comparative Examples 1 to 6 demonstrate poor 1000-cycle capacity retention at 45 °C, high-temperature cycling gas generation performance, and storage gas generation performance at 60 °C.

The above descriptions of the various embodiments tend to emphasize the differences between the embodiments, and identical or similar aspects may be cross-referenced with one another. For the sake of brevity, such common aspects are not repeated herein.

It should be noted that the present application is not limited to the above embodiments. The above-mentioned embodiments are merely examples, and embodiments having substantially the same configuration as the technical idea and exerting the same effects within the scope of the technical solution of the present application are all included in the technical scope of the present application. Furthermore, other embodiments configured by applying various modifications that can be conceived by those skilled in the art to the embodiments and combining some constituent elements in the embodiments are also included in the scope of the present application without departing from the scope of the gist of the present application.

## Claims

1. A zirconium-yttrium composite coated modified lithium nickel cobalt manganese oxide positive electrode material, including a lithium nickel cobalt manganese oxide positive electrode material matrix and a zirconium-yttrium composite coating layer coated on a surface of the lithium nickel cobalt manganese oxide positive electrode material matrix, wherein a chemical composition of the zirconium-yttrium composite coating layer is Zr_{z}Y_{1-z}O_{1.5+0.5z}, where 0.4≤z≤0.8.

2. The zirconium-yttrium composite coated modified lithium nickel cobalt manganese oxide positive electrode material according to claim 1, wherein a chemical composition of the lithium nickel cobalt manganese oxide positive electrode material matrix is LiₐNi_{b}Co_{c}Mn_{1-b-c-e}MₑO₂, where 1.0≤a≤1.2, 0.5≤b<1, 0<c≤0.1, 0≤e≤0.06, M comprises one or more of Mg, Ti, Zr, Ba, Al, Y, Sr, Nd, W, or Ca.

3. The zirconium-yttrium composite coated modified lithium nickel cobalt manganese oxide positive electrode material according to claim 1 or 2, wherein a molar ratio of the zirconium-yttrium composite coating layer to transition metal elements in the lithium nickel cobalt manganese oxide positive electrode material matrix is in a range from 0.02% to 0.5%.

4. A method for preparing the zirconium-yttrium composite coated modified lithium nickel cobalt manganese oxide positive electrode material according to any one of claims 1 to 3, comprising following steps:
(1) mixing a nickel cobalt manganese hydroxide precursor, a lithium source, and an M-containing compound in stoichiometric ratio, sintering, and pulverizing to obtain a lithium nickel cobalt manganese oxide positive electrode material matrix;
(2) mixing a zirconium compound and an yttrium compound uniformly, then adding to water and stirring uniformly, after materials are completely dissolved, adding ammonia water to adjust a pH value, and stirring for reaction, then filtering, washing, and freeze-drying a precipitate obtained from the reaction to obtain a coating agent intermediate;
(3) mixing the lithium nickel cobalt manganese oxide positive electrode material matrix obtained in step (1) with the coating agent intermediate obtained in step (2), and then sintering an obtained mixture, thereby achieving the zirconium-yttrium composite coated modified lithium nickel cobalt manganese oxide positive electrode material.

5. The method according to claim 4, wherein in step (1), the lithium source is one or more of lithium carbonate, lithium hydroxide, or lithium acetate.

6. The method according to claim 4 or 5, wherein in step (1), the M-containing compound comprises one or more of a M-containing carbonate, a M-containing hydroxide, a M-containing sulfate, or a M-containing oxide.

7. The method according to any one of claims 4 to 6, wherein in step (1), the sintering is performed in an oxygen or air atmosphere, a flow rate of the introduced oxygen or air is in a range from 8 m³/h to 12 m³/h, a sintering temperature is in a range from 700 °C to 950 °C, and a sintering time period is in a range from 12 h to 20 h.

8. The method according to any one of claims 4 to 7, wherein in step (2), the zirconium compound is one or more selected from zirconium nitrate, zirconium chloride, zirconium sulfate, zirconium oxychloride, or zirconium acetate.

9. The method according to any one of claims 4 to 8, wherein in step (2), the yttrium compound is one or more selected from yttrium chloride, yttrium nitrate, yttrium sulfate, or yttrium acetate.

10. The method according to any one of claims 4 to 9, wherein in step (2), a ratio of a volume of water to a total amount of substance of the zirconium compound and the yttrium compound is in a range from 30 mL/mmol to 50 mL/mmol.

11. The method according to any one of claims 4 to 10, wherein in step (2), the pH value is adjusted to 8.5 to 10.5.

12. The method according to any one of claims 4 to 11, wherein in step (2), a stirring and reaction temperature is in a range from 30 °C to 60 °C, a reaction time period is in a range from 6 h to 20 h, and a stirring speed is in a range from 100 r/min to 550 r/min.

13. The method according to any one of claims 4 to 12, wherein in step (2), the freeze-drying refers to first freezing at a temperature of -30 °C to -50 °C for 8 h to 10 h, and then performing vacuum drying, wherein a vacuum drying temperature is in a range from -20 °C to -30 °C, a vacuum drying time period is in a range from 12 h to 24 h, and a vacuum degree is in a range from 0.05 mbar to 0.35 mbar.

14. The method according to any one of claims 4 to 13, wherein in step (2), a particle size D50 of the coating agent intermediate is in a range from 0.01 µm to 0.25 µm, a moisture content of the coating agent intermediate is in a range from 100 ppm to 400 ppm, and a specific surface area of the coating agent intermediate is in a range from 30 m²/g to 60 m²/g.

15. The method according to any one of claims 4 to 14, wherein in step (3), the sintering is performed in a high-oxygen-pressure atmosphere furnace, an oxygen pressure in the high-oxygen-pressure atmosphere furnace during the sintering is in a range from 6 MPa to 12 MPa, a sintering temperature is in a range from 400 °C to 800 °C, and a sintering time period is in a range from 8 h to 16 h.

16. A lithium-ion battery, wherein a positive electrode material of the lithium-ion battery comprises the zirconium-yttrium composite coated modified lithium nickel cobalt manganese oxide positive electrode material according to any one of claims 1 to 3 or comprises the zirconium-yttrium composite coated modified lithium nickel cobalt manganese oxide positive electrode material prepared by the method according to any one of claims 4 to 15.
